Europäisches Patentamt

European Patent Office

Office européen des brevets

(11) Veröffentlichungsnummer : **0 069 980**
**B1**

(12)                    **EUROPÄISCHE PATENTSCHRIFT**

(45) Veröffentlichungstag der Patentschrift :
09.10.85

(21) Anmeldenummer : 82106060.5

(22) Anmeldetag : 07.07.82

(51) Int. Cl.⁴ : **B 23 Q 11/00**

(54) **Kühlschmierstoff-Trenn- und Reinigungsvorrichtung.**

(30) Priorität : 11.07.81 DE 3127440

(43) Veröffentlichungstag der Anmeldung :
19.01.83 Patentblatt 83/03

(45) Bekanntmachung des Hinweises auf die Patenterteilung : 09.10.85 Patentblatt 85/41

(84) Benannte Vertragsstaaten :
CH FR GB IT LI SE

(56) Entgegenhaltungen :
DE-A- 2 700 481
DE-B- 2 157 223
DE-C- 1 218 406
US-A- 3 618 772
WERKSTATT TECHNIK, Band 72, Nr. 6, Juni 1982,
Berlin, "Späne Entsorgungsanlage" Seite 330
WERKSTATT UND BETRIEB, Band 112, Nr. 1, Januar
1979, München K.W. WIETERSHEIM "Späneentsorgung an spanenden Werkzeugmaschinen", Seiten 25
bis 28

(73) Patentinhaber : MANNESMANN Aktiengesellschaft
Mannesmannufer 2
D-4000 Düsseldorf 1 (DE)

Mayfran GmbH
Alfredstrasse 295
D-4300 Essen 1 (DE)

(72) Erfinder : Frese, Elmar
Burgmüllerstrasse 46
D-4000 Düsseldorf (DE)
Erfinder : Koch, Gerhard
Rückertstrasse 28
D-4600 Dortmund (DE)

(74) Vertreter : Boecker, Carl Otto, Dipl.-Ing.
Dr. Ehrhardt-Strasse 31
D-6670 St. Ingbert (Saar) (DE)

## Beschreibung

Die Erfindung betrifft eine Vorrichtung zum Rückleiten des bei der spangebenden Bearbeitung von Metallen in einer Werkzeugmaschine den Spänen anhaftenden Kühlschmierstoffes, der sich während des Abtransportes der Späne auf einem endlos umlaufenden Stahlscharnierband löst, wobei das Scharnierband in einem als Späneförderer ausgebildeten Vollkastengerüst geführt ist, das aus einem geraden Flachkastenteil und einem kastenartigen Aufsteigteil besteht und dessen gerades Flachkastenteil entsprechend seiner Aufgabelänge bis unter das Maschinenbett der Werkzeugmaschine geschoben werden kann, so daß herunterfallende Späne sofort auf das Scharnierband gelangen und der Kühlschmierstoff durch die Scharniere oder durch zusätzliche Löcher des Scharnierbandes in das Vollkastengerüst abläuft bzw. absickert.

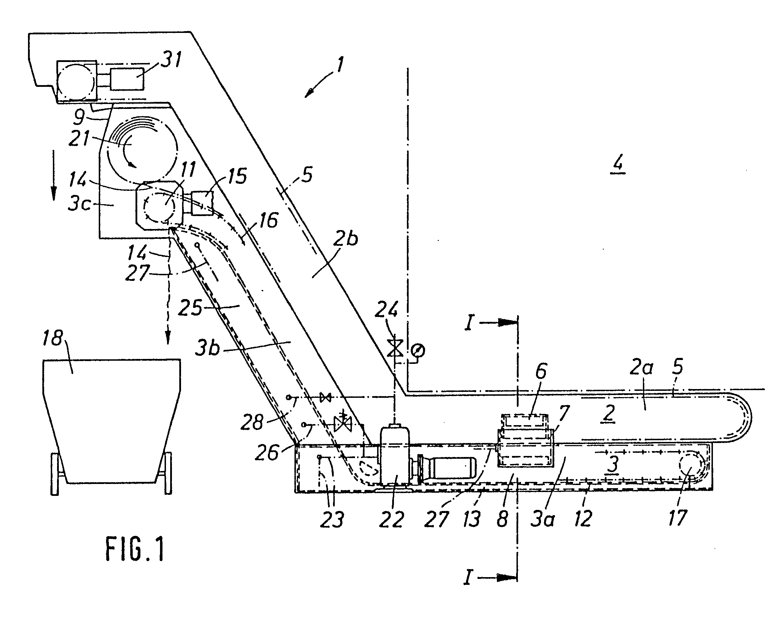

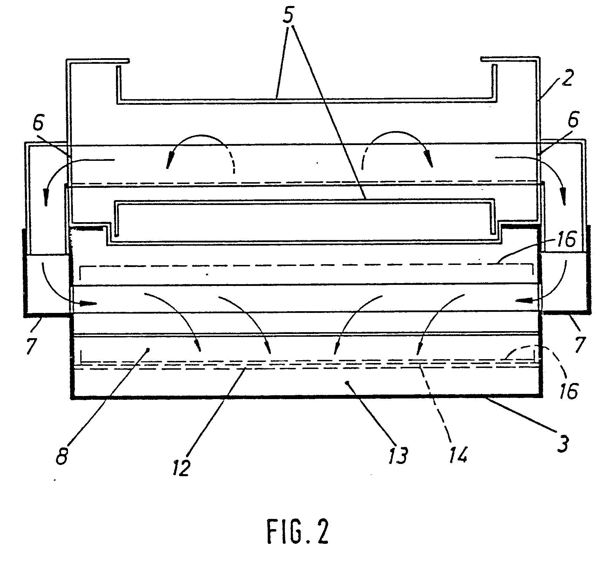

Derartige Systeme zum Trennen von Spänen und Kühlmittel sind als Späneförderer bekannt (Prospekt Mayfran-Späneförderer der Mitanmelderin) und im praktischen Betrieb vielfach angewendet, vgl. WERKSTATT UND BETRIEB, Band 112, Nr. 1, Januar 1979, München K.W. WIETERSHEIM « Späneentsorgung an spanenden Werkzeugmaschinen », Seiten 25 bis 28, insbesondere, Seite 25, Abschnitt 2 ; Fig. 1 bis 3. Eine typische Form des Späneförderers besteht aus einem geraden Flachkastenteil mit einem sich daran anschließenden Aufsteigteil, welches ebenfalls als Kastengerüst ausgeführt ist. Die Länge des geraden Flachkastenteils, die Aufgabelänge genannt wird, hängt dabei davon ab, ob eine oder mehrere Werkzeugmaschinen von dem Späneförderer bedient werden sollen. In dem Vollkastengerüst läuft das endlose Scharnierband um. Zum Betrieb wird der Späneförderer mit dem Flachkastenabschnitt unterhalb des Maschinenlaufes einer Werkzeugmaschine aufgestellt und das Aufsteigteil ragt seitlich neben der Maschine hoch, wo wieder ausreichend Platz zur Verfügung steht, denn unterhalb des Maschinenbettes selbst beträgt der verfügbare Raum in der Höhe nur ca. 40 cm, der dann von dem Flachkasten des Späneförderers nahezu vollständig ausgefüllt wird. Die anfallende Spänemenge wird kontinuierlich austransportiert und fällt am Ende des Aufsteigteils vom Scharnierband in einen unter dem Aufsteigteil vorgesehenen Spänebehälter. Während der Zeit des Transportes sickert bzw. tropft der Kühlschmierstoff durch das Scharnierband und sammelt sich in dem Vollkastengerüst. Von hier wird der Kühlschmierstoff mittels Pumpe wieder der Werkzeugmaschine zugeführt.

Da in den meisten Fällen die separate und externe Aufstellung eines Filtergerätes irgendwo neben der Werkzeugmaschine, wohin dann zunächst der Kühlschmierstoff vom Späneförderer gepumpt werden muß, aus Platzgründen scheitert, wurde es hierbei bisher in Kauf genommen, daß der gesammelte und dem Verbraucher erneut zugeleitete Kühlschmierstoff, welcher durch den vorherigen Einsatz noch von feinsten Spänchen beladen ist, sich am Werkstück hinsichtlich der Oberflächenqualität und am Werkzeug wegen der Herabsetzung der Standzeit ungünstig auswirkt. Hinzu kommt noch, daß die Lebensdauer des Kühlschmierstoffes durch die zunehmende Verschmutzung herabgesetzt wird.

Der Erfindung liegt die Aufgabe zugrunde, die vorgenannten Nachteile zu beseitigen und ohne Beanspruchung von zusätzlichem Platz die Filterung des von den Spänen abgesonderten Kühlschmierstoffes zu ermöglichen, so daß die Qualität (Sauberkeit) des zur Werkzeugmaschine geförderten Kühlschmierstoffes verbessert werden kann.

Gemäß der Erfindung wird diese Aufgabe dadurch gelöst, daß unterhalb der Aufgabelänge des geraden Flachkastenteils des Späneförderers die Schmutzflüssigkeit eines Unterdruckfiltergerätes angeordnet ist, daß zumindest eine Austrittsöffnung für den Kühlschmierstoff an mindestens einer Seite des Flachkastenteils vorgesehen ist und daß die Austrittsöffnung mit einem bis in die Schmutzflüssigkeitskammer des Unterdruckfiltergerätes reichenden Einlaufkasten korrespondiert. Obschon die bereits erwähnten, vor allem in der Höhe (ca. 40 cm) knapp bemessenen räumlichen Verhältnisse unterhalb einer Werkzeugmaschine die übereinandergeordnete Integration eines Späneförderers mit einem Filtergerät als unmöglich erscheinen lassen mußte, läßt es sich in diesem Fall durchführen, weil das bekannte Unterdruckfiltergerät einen gleichen Aufbau aufweist wie der bekannte Späneförderer, nämlich ein gerades Flachkastenteil mit einem Aufsteigteil bzw. mit einem aufsteigenden Austragearm. Durch die in den Einlaufkasten einmündende Austrittsöffnung, wobei das Vollkastengerüst als Verteiler dient, gelangt der Kühlschmierstoff in ein Filtergerät, das als Unterdruckfilter betrieben wird. Die verschmutzte Flüssigkeit befindet sich zunächst in einer oberen Kammer, die von einer unteren Kammer durch einen beispielsweise als Lochplatte oder als Spaltsiebboden ausgebildeten Filterschichtträger getrennt ist. Auf dem Filterschichtträger kann ein Filterband oder Filtervlies geführt sein, das durch ein endlos umlaufendes Kratzerband niedergehalten wird. Das Kratzerband hat darüber hinaus die Aufgabe, die auf dem Filterband oder auf dem Spaltsiebboden zurückbleibenden Verunreinigungen einem Auffangbehälter für den Schmutz zuzuführen. Der saubere Kühlschmierstoff wird hingegen mittels einer Filterpumpe zum Verbraucher, der Werkzeugmaschine, gefördert. Neben der so oder so den Filtereffekt bewirkenden Schwerkraft bzw. dem hydrostatischen Druck über dem Filterschichtträger, unterstütz die Filterpumpe den Durchtritt des verschmutzten Kühlschmierstoffes, indem die Pumpe durch Ansaugen ein Vakuum in der unteren Kammer erzeugt. Die festgehaltenen Verunreinigungen führen nach einer gewissen Zeit zum Aufbau eines Schmutzkuchens über der Filterschicht. Wenn der Schmutzkuchen zu dick wird, erfolgt die Betätigung eines Vakuumschalters. Das Unterdruckfilter wird sodann gelüftet und das Filterband fährt automatisch einen Takt weiter, so daß ein neuer Abschnitt des Filterbandes zum Einsatz kommt. Die Zufuhr von Kühlschmierstoff ist während der Wechselzeit durch Nachspeisung aus einem gefüllten Reservetank gesichert. Das vorstehend beschriebene Unterdruckfilter ist in der Praxis ebenfalls bekannt und weit verbreitet (Prospekt SACK-Unterdruckfilter-Automat der Mitanmelderin ; DE-PS 1 218 406).

Die Erfindung schlägt weiterhin vor, daß bei einem Unterdruckfilter bestehend aus einem geraden Flachkastenteil und einem aufsteigenden Austragearm mit abschließendem Austragekopf ein Teil des Austragearmes als Regenerationstank ausgebildet ist und nach einer weiteren Ausgestaltung der Erfindung ist vorgesehen, daß die Zuführung des Filterbandes von einer Vorratsrolle und der Austritt des verschmutzten Filterbandes vom Austragekopf her erfolgt. Durch diese Maßnahmen ist es vorteilhaft möglich, das bekannte Unterdruckfilter, welches je nach Anlagentyp eine Höhe von c. 70-250 cm — also bis zum sechsfachen des verfügbaren Raumes unterhalb einer Werkzeugmaschine — allein des geraden Flachkastenteiles besitzt, in der extrem niedrigen Bauweise vorzusehen. Trotz des zusätzlichen Regenerationstanks im Austragearm und der Filterbandzuführung vom Austragekopf her, worauf weiter unten noch einmal genauer eingegangen wird, kommen Austragearm und Aufsteigteil mit dem gleichen Platz außerhalb der Werkzeugmaschine aus, der ansonsten vom Späneförderer allein ausgefüllt worden ist.

Eine Ausgestaltung der Erfindung sieht vor, daß der Austragekopf als Spänerutsche ausgebildet ist. Die Kompaktbauweise von Späneförderer und Unterdruckfiltergerät läßt es zu, daß die vom Förderer ausgetragenen Späne und das verbrauchte Filterband des Filters in einen gemeinsamen Schmutzbehälter gelangen, der unterhalb des Austragearmes bzw. Aufsteigteils vorgesehen ist, wobei die vom Späneförderer abfallenden Späne von der Spänerutsche in den Schmutzbehälter geleitet werden.

Nach einem Vorschlag der Erfindung ist vorgesehen, daß ein gemeinsamer Antriebsmotor für das umlaufende Scharnierband und das Kratzerband vorhanden ist. In diesem Fall ist der das Scharnierband zum ununterbrochenen Umlauf antreibende Motor beispielsweise über Wellen, die mittels einer Kupplung zusammenschaltbar sind, mit den Kettenrädern des Kratzerbandes verbindbar.

Bei einer mehrere Werkzeugmaschinen erfassenden Aufgabelänge des geraden Flachkastenteils ist nach der Erfindung vorgesehen, daß das Unterdruckfiltergerät von dem geraden Flachkastenteil des Späneförderers um ein vielfaches überragt wird. Im Gegensatz zum Späneförderer, dessen Flachkastenteil z. B. unter drei oder vier Werkzeugmaschinen geschoben wird, ist das Unterdruckfilter sehr viel kürzer ausgeführt, da zwar alle abfallenden Späne von dem Späneförderer aufgefangen werden müssen, der in dem Vollkastengerüst gesammelte Kühlschmierstoff aber nur an der bzw. den Austrittsöffnungen in das Filtergerät einlaufen kann.

In der Zeichnung wird die Erfindung an Hand eines Ausführungsbeispiels näher erläutert. Es zeigt :

Figur 1 in teilweise schematischer Form die Seitenansicht einer unter einer Werkzeugmaschine geschobenen Kühlschmierstoff-Trenn- und Reinigungsvorrichtung, und

Figur 2 einen Schnitt nach der Linie I-I in Fig. 1.

Die insgesamt mit 1 bezeichnete Einheit der Trenn- und Reinigungsvorrichtung besteht aus dem Späneförderer und dem Unterdruckfilter 3. Der Späneförderer 2 ist auf das Unterdruckfiltergerät 3 aufgesetzt. Mit ihren geraden Flachkastenabschnitten 2a, 3a reichen Späneförderer und Unterdruckfilter bis unterhalb des Maschinenlaufs einer angedeuteten Werkzeugmaschine 4. Von der Werkzeugmaschine 4 fallen mit Kühlschmierstoff behaftete Späne unmittelbar auf ein in dem Späneförderer 2, der als Kastengerüst ausgeführt ist, endlos umlaufendes Scharnierband 5. Das Scharnierband 5 bewegt sich in Richtung des Aufsteigteils 2b, das sich dem Flachkastenabschnitt 2a anschließt. Die solchermaßen transportierten Späne fallen am obersten Punkt des Aufsteigteils 2b, wo das Scharnierband wieder umgelenkt wird, vom Scharnierband 5 in den Schmutzbehälter 18. Der den Spänen anhaftende Kühlschmierstoff tritt hingegen während des Transportes durch Löcher oder Schlitze der Scharniere in den Kasten bzw. Sammelbehälter unterhalb des Scharnierbandes 5.

Der gesammelte Kühlschmierstoff ist noch mit feinen und feinsten Spänchen durchsetzt und gelangt über seitliche Austrittsöffnungen 6 des geraden Flachkastenabschnittes 2a des Späneförderers 2 über einen Einlaufkasten 7 des Unterdruckfilters 3 bis in die Schmutzflüssigkeitskammer 8. Die Schmutzflüssigkeitskammer 8 ist durch einen Filterschichtträger in Form eines Spaltsiebes oder einer Lochplatte 12 von einer unteren Kammer 13 für die gereinigte Flüssigkeit getrennt. Über dem Filterschichtträger ist noch — vor allem wenn es sich bei dem Filterschichtträger um eine Lochplatte handelt — ein Filterband oder -vlies 14 geführt. Das Unterdruckfilter 3 weist im Anschluß an den geraden Flachkastenabschnitt 3a einen unter dem gleichen Winkel wie das Aufsteigteil 2b des Späneförderers 2 ansteigenden Austragearm 3b auf, der in Form eines Austragekopfes 3c endet. Im Austragekopf 3c sind Kettenräder 11 gelagert, die von einem Motor 15 angetrieben werden und ein endloses Kratzerband 16, das von einer Führung 17 im geraden Flachkastenteil 3a umgelenkt wird, transportieren. Das Kratzerband 16 bewegt sich im Flachkastenabschnitt 3a oberhalb des Filterbandes 14, so daß dieses gegen die Lochplatte 12 niedergehalten wird und nicht aufschwimmen kann. Zudem trägt das Kratzerband 16 das verbrauchte Filterband und den abgelagerten Schmutz aus, der vom Austragekopf 3c bis in einen darunter aufgestellten Schmutzbehälter 18 fällt. Der Austragekopf 3c ist darüber hinaus teilweise als Spänerutsche 9 ausgebildet, so daß die im Umlenkpunkt des Scharnierbandes 5 abfallenden Späne von der Spänerutsche problemlos in den gemeinsamen Schmutzbehälter 18 geleitet werden.

Da sich der gerade Flachkastenabschnitt 3a des Unterdruckfilters 3 unterhalb der Werkzeugmaschine 4 befindet, ist die ansonsten hier angeordnete Filterband-Vorratsrolle 21 in den Austragekopf 3c verlagert worden, wobei die Filterbandzufuhr in der Weise erfolgt, daß das Filterband zunächst auf dem Obertrum des Kratzerbandes 16 aufliegt, von diesem mitgenommen wird und nach der Umlenkung über die Führung 17 unter dem Kratzerband 16 liegend auf den Filterschichtträger eingebracht wird. Verbrauchte Filterbandabschnitte treten ebenfalls oberhalb des Austragearms 3b aus und fallen in den Schmutzbehälter 18.

Seitlich neben dem geraden Flachkastenteil 3a des Unterdruckfilters 3 ist eine Filterpumpe 22 angebracht, die mittels Rohrleitungen 23 in die untere Kammer 13 ragt und hier einen Unterdruck erzeugt, der die ansonsten allein auf Schwerkraft beruhende Filterwirkung unterstützt. Der Schmutzflüssigkeit, die übrigens von dem Einlaufkasten 7 unterhalb des Obertrums von Kratzerförderer und Filterband zugeführt wird, werden bei Durchtritt durch das Filterband die verbliebenen schädliche Fremdstoffe entzogen. Die überwiegende Menge der gereinigten Flüssigkeit wird sodann von der Filterpumpe 22 über die Reinleitung 24 zur Werkzeugmaschine 4 gefördert, während ein geringer Anteil über eine Abzweigleitung 28 dem Regenerationstank 25 zugeführt wird. Der Regenerationstank 25, der im Austragearm 3b angeordnet ist, muß immer gefüllt sein, um die Versorgung der Werkzeugmaschine 4 während der Zeit des Filterbandwechsels zu gewährleisten. Die Pumpe 22 zieht dann über die Leitung 26 die saubere Flüssigkeit aus dem Regenerationstank 25 ab. Eine Überlaufleitung 27, die in den Einlaufkasten 7 mündet, verhindert ein überlaufen des Regenerationstanks 25.

Unter Verzicht auf den Motor 15, der das Kratzerband 16 taktweise bewegt, kann die Bewegung des Kratzerbandes 16 von dem Antriebsmotor 31 des stetig umlaufenden Scharnierbandes 5 abgeleitet werden, so daß die Einrichtung nur mit dem einen Motor 31 des Späneförders 2 gefahren wird. Über nicht näher bezeichnete Wellen mit einer zwischengeschalteten Kupplung zum zeitweisen Verbinden der Wellen, kann dann beispielsweise die Antriebsleistung des Motors 31 auf die Kettenräder 11 für das Kratzerband 16 übertragen werden.

## Patentansprüche

1. Vorrichtung zum Rückleiten des bei der spangebenden Bearbeitung von Metallen in einer Werkzeugmaschine den Spänen anhaftenden Kühlschmierstoffes, der sich während des Abtransportes der Späne auf einem endlos umlaufenden Stahlscharnierband (5) löst, wobei das Scharnierband in einem als Späneförderer (2) ausgebildeten Vollkastengerüst geführt ist, das aus einem geraden Flachkastenteil (2a) und einem kastenartigen Aufsteigteil (2b) besteht und dessen gerades Flachkastenteil entsprechend seiner Aufgabelänge bis unter das Maschinenbett der Werkzeugmaschine (4) geschoben werden kann, so daß herunterfallende Späne sofort auf das Scharnierband gelangen und der Kühlschmierstoff durch die Scharniere oder durch zusätzliche Löcher des Scharnierbandes in das Vollkastengerüst abläuft bzw. absickert, dadurch gekennzeichnet, daß unterhalb der Aufgabelänge des geraden Flachkastenteils (2a) des Späneförderers (2) die Schmutzflüssigkeitskammer (8) eines Unterdruckfiltergerätes (3) angeordnet ist, daß zumindest eine Austrittsöffnung (6) für das Kühlschmiermittel an mindestens einer Seite des Flachkastenteils (2a) vorgesehen ist und daß die Austrittsöffnung (6) mit einem bis in die Schmutzflüssigkeitskammer (8) des Unterdruckfiltergerätes (3) reichenden Einlaufkasten (7) korrespondiert.

2. Vorrichtung nach Anspruch 1, mit einem Unterdruckfilter bestehend aus einem geraden Flachkastenteil und einem aufsteigenden Austragearm mit abschließendem Austragekopf, dadurch gekennzeichnet, daß ein Teil des Austragearmes (3b) als Regenerationstank (25) ausgebildet ist.

3. Vorrichtung nach den Ansprüchen 1 und 2, dadurch gekennzeichnet, daß die Zuführung des Filterbandes (14) von einer Vorratsrolle (21) und der Austritt des verschmutzten Filterbandes gemeinsam (14) vom Austragekopf (3c) her erfolgt.

4. Vorrichtung nach den Ansprüchen 1 bis 3, dadurch gekennzeichnet, daß der Austragekopf (3c) als Spänerutsche (9) ausgebildet ist.

5. Vorrichtung nach den Ansprüchen 1 bis 4, gekennzeichnet durch einen gemeinsamen Antriebsmotor (31) für das umlaufende Scharnierband (5) des Späneförderers (2) und das taktweise betätigbare Kratzerband (16) des Unterdruckfiltergerätes (3).

6. Vorrichtung nach den Ansprüchen 1 bis 5, bei welcher die Aufgabelänge des geraden Flachkastenteils mehrere hintereinandergeschaltete Werkzeugmaschinen umfaßt, dadurch gekennzeichnet, daß das Unterdruckfiltergerät (3) von dem geraden Flachkastenteil (2a) des Späneförderers (2) um ein vielfaches überragt wird.

## Claims

1. Apparatus for returning the cooling lubricant adhering to the swarf when machining metals in a machine tool, which is detached during the discharge of the swarf on an endless rotating steel hinge belt (5), in which case the hinge belt is guided in a full box frame constructed as a swarf conveyor (2), which consists of a straight flat box part (2a) and a box-like ascending part (2b) and whereof the straight flat box part, corresponding to its feed length, can be moved below the machine bed of the machine tool (4), so that falling swarf arrives immediately on the hinge belt and the cooling lubricant runs off or trickles through the hinges or through additional holes of the hinge belt into the full box frame, characterized in that located below the feed length of the straight flat box part (2a) of the swarf conveyor (2) is the contaminated liquid chamber (8) of a vacuum filter unit (3), at least one outlet opening (6) for the cooling lubricant is provided on at least one side of the flat box part (2a) and the outler opening (6) corresponds to an inlet box (7) extending into the contaminated liquid chamber (8) of the vacuum filter unit (3).

2. Apparatus according to claim 1, with a vacuum filter consisting of a straight flat box part and an ascending discharge arm with terminating discharge head, characterized in that part of the discharge arm (3b) is constructed as a regeneration tank (25).

3. Apparatus according to claim 1, characterized in that the filter band (14) is supplied from a storage roll (21) and the outlet of the contaminated filter band is effected from the discharge head (3c).

4. Apparatus according to claim 1, characterized in that the discharge head (3c) is constructed as a swarf slide (9).

5. Apparatus according to claim 1, characterized by a common drive motor (31) for the rotating hinge belt (5) of the swarf conveyor (2) and the step-wise operating scraper band (16) of the vacuum filter unit (3).

6. Apparatus according to claim 1, in which the feed length of the straight flat box part comprises several machine tools located one behind the other, characterized in that the straight flat box part (2a) of the swarf conveyor (2) projects many times over beyond the vacuum filter unit (3).

## Revendications

1. Dispositif de renvoi du réfrigérant lubrifiant qui adhère aux copeaux pendant l'usinage, avec formation de copeaux, de métaux dans une machine-outil et se dissout pendant le transport sur une bande à charnières (5) sans fin en acier, la bande à charnières étant guidée dans un bâti en caisson fermé constituant le dispositif de transport (2) des copeaux, constitué par une partie en caisson plate rectiligne (2a) et par une partie en caisson ascendante (2b), la partie en caisson plate rectiligne pouvant être poussée, sur toute sa longueur de réception, sous le banc de machine de la machine-outil (4) de sorte que les copeaux qui tombent, arrivent immédiatement sur la bande à charnières et que le réfrigérant lubrifiant coule ou passe par suintement à travers les charnières ou des trous supplémentaires ménagés dans la bande à charnières, pour tomber dans le bâti en caisson fermé, caractérisé en ce qu'au-dessous de la partie en caisson plate rectiligne (2a) du dispositif de transport (2) des copeaux se trouve la chambre à liquide sale (8) d'un appareil de filtrage à dépression (3), il y a au moins une ouverture de sortie (6) pour le réfrigérant lubrifiant d'un côté au moins de la partie en caisson plate (2a) et l'ouverture de sortie (6) correspond à un caisson d'entrée (7) qui pénètre jusque dans la chambre à liquide sale (8) de l'appareil de filtrage à dépression (3).

2. Dispositif suivant la revendication 1, comportant un filtre à dépression et constitué par une partie en caisson plate rectiligne et un bras d'évacuation ascendant comportant une tête d'évacuation qui le ferme, caractérisé en ce qu'une partie du bras d'évacuation (3b) est constituée par un réservoir de récupération (25).

3. Dispositif suivant l'une quelconque des revendications 1 et 2 caractérisé en ce que l'amenée de la bande filtrante (14) à partir d'un rouleau d'alimentation (21) et la sortie de la bande filtrante chargée de déchets (14) s'effectuent toutes deux depuis la tête d'évacuation (3c).

4. Dispositif suivant l'une quelconque des revendications 1 à 3 caractérisé en ce que la tête d'évacuation (3c) comporte une goulotte à copeaux (9).

5. Dispositif suivant l'une quelconque des revendications 1 à 4 caractérisé en ce qu'il comprend un moteur d'entraînement (31) commun pour la bande à charnières (5) continue du dispositif de transport (2) des copeaux et la bande pour gratteurs (16) à fonctionnement périodique de l'appareil de filtrage à dépression (3).

6. Dispositif suivant l'une quelconque des revendications 1 à 5 dans lequel la longueur de réception de la partie en caisson plate rectiligne couvre la longueur globale de plusieurs machines-outils disposées les unes à la suite des autres, caractérisé en ce que l'appareil de filtrage à dépression (3) est dépassé de plusieurs fois par la partie en caisson plate rectiligne (2a) du dispositif de transport (2) des copeaux.

FIG.1

FIG.2